# EUROPEAN PATENT APPLICATION

(11) **EP 4 622 048 A1**
(43) Date of publication of application: **24.09.2025**
(21) Application number: 24773851.1
(22) Date of filing: 22.02.2024
(51) Int. Cl.: H02J 7/00

(54) **CHARGING METHOD, DEVICE, AND MEDIUM**

(30) Priority: 23.03.2023 CN 202310326452
(71) Applicant: Huawei Technologies Co., Ltd., Shenzhen, Guangdong 518129 (CN)
(72) Inventor: WANG, Sen, Shenzhen, Guangdong 518129 (CN); LAN, Wentao, Shenzhen, Guangdong 518129 (CN); WANG, Yukai, Shenzhen, Guangdong 518129 (CN)
(74) Representative: Goddar, Heinz J.
(86) International application number: PCT/CN2024/078092
(87) International publication number: WO 2024/193283

(57) **Abstract**

This application relates to the field of mobile terminal technologies, and discloses a charging method, a device, and a medium. The charging method in this application includes: detecting that a first electronic device establishes a charging connection to a second electronic device; obtaining a charging request of the second electronic device, where the charging request includes a requested charging voltage and a requested charging current; determining that the first electronic device is in a first running state, and using the requested charging voltage and the requested charging current as a power supply voltage and a power supply current that are provided for the second electronic device; and determining that the first electronic device is in a second running state, and determining, based on the second running state and the charging request, a first power supply voltage and a first power supply current that are provided for the second electronic device. **In** the foregoing solution, power supply to the second electronic device is implemented in a case in which normal running of the first electronic device is ensured. This improves user experience.

## Description

This application claims priority to Chinese Patent Application No. 202310326452.8, filed with the China National Intellectual Property Administration on March 23, 2023 and entitled "CHARGING METHOD, DEVICE, AND MEDIUM", which is incorporated herein by reference in its entirety.

### TECHNICAL FIELD

This application relates to the field of mobile terminal technologies, and in particular, to a charging method, a device, and a medium.

### BACKGROUND

Currently, electronic devices such as mobile phones are widely used in people's daily life. The electronic devices usually have a basic forward charging function. In other words, the electronic devices are charged by using charging devices, and charging power may reach 5 W to 10 W. To improve a charging rate, most electronic devices further provide a super-fast charging function, and charging power may exceed 20 W.

In some embodiments, the electronic device may alternatively provide a reverse charging function for another electronic device (for example, an electronic device such as a mobile phone, a tablet, or a watch). In a reverse charging process of the electronic device, a source end device (namely, a device that supplies power) constantly uses a voltage and a current that are requested by a receive end device (namely, a to-be-charged device) as a voltage and a current for supplying power to the receive end device. As a result, in some cases, a temperature is excessively high, an application of the source end device cannot run, and the like occur in the source end device. Consequently, normal running of the source end device is affected, and user experience is degraded.

### SUMMARY

To implement power supply to a second electronic device in a case in which normal running of a first electronic device is ensured, embodiments of this application provide a charging method, a device, and a medium.

According to a first aspect, an embodiment of this application provides a charging method, applied to a first electronic device. The method includes: detecting that a first electronic device establishes a charging connection to a second electronic device; obtaining a charging request of the second electronic device, where the charging request includes a requested charging voltage and a requested charging current; determining that the first electronic device is in a first running state, and using the requested charging voltage and the requested charging current as a power supply voltage and a power supply current that are provided for the second electronic device; and determining that the first electronic device is in a second running state, and determining, based on the second running state and the charging request, a first power supply voltage and a first power supply current that are provided for the second electronic device, where the first power supply voltage is equal to the requested charging voltage, and the first power supply current is less than the requested charging current.

In this embodiment of this application, the first electronic device may determine, based on the running state of the first electronic device and the charging request of the second electronic device, the power supply voltage and the power supply current that are provided by the first electronic device for the second electronic device. This implements power supply to the second electronic device in a case in which normal running of the first electronic device is ensured. This improves user experience.

It may be understood that, in this application, that the first power supply voltage is equal to the requested charging voltage does not mean that the first power supply voltage is absolutely equal to the requested charging voltage, and an error may exist. For example, the error may be within a preset threshold, for example, the preset threshold may be 0.1 V. It may be understood that equality described in another part of this application may also be understood as "not absolute equality", and an error is allowed.

In a possible implementation, at least one of the first running state or the second running state includes running states in a plurality of dimensions, and the running states in the plurality of dimensions include at least one of a current remaining battery level, a current battery voltage, current system power consumption, a current battery temperature, or a current running application state of the first electronic device.

In a possible implementation, determining that the first electronic device is in the first running state includes: determining available output currents that respectively correspond to the running states in the plurality of dimensions of the first electronic device; determining a currently available output current of the first electronic device based on the available output currents that respectively correspond to the running states in the plurality of dimensions of the first electronic device; and when the currently available output current of the first electronic device is greater than or equal to the requested charging current, determining that the first electronic device is in the first running state.

In a possible implementation, determining that the first electronic device is in the second running state includes: when the currently available output current of the first electronic device is less than the requested charging current, determining that the first electronic device is in the second running state.

In a possible implementation, determining the currently available output current of the first electronic device based on the available output currents that respectively correspond to the running states in the plurality of dimensions of the first electronic device includes: determining, based on the running states in the plurality of dimensions of the first electronic device, levels in the dimensions corresponding to the first electronic device; determining, based on the levels in the dimensions corresponding to the first electronic device, available output currents that respectively correspond to the levels in the dimensions; and using a smallest available output current in the available output currents that respectively correspond to the levels in the dimensions as the currently available output current of the first electronic device.

It may be understood that, the smallest available output current in the available output currents that respectively correspond to the levels in the dimensions is the power supply current that can be provided for the second electronic device in a case in which normal running of the first electronic device is ensured.

In a possible implementation, determining, based on the second running state and the charging request, the first power supply voltage and the first power supply current that are provided for the second electronic device includes: using the requested charging voltage as the first power supply voltage provided for the second electronic device; and using the currently available output current of the first electronic device as the first power supply current provided for the second electronic device.

In a possible implementation, before obtaining the charging request of the second electronic device, the method further includes: determining, by the first electronic device, a type of the first electronic device; when the first electronic device determines that the type of the first electronic device is a source end device, determining whether the first electronic device and the second electronic device successfully negotiate a fast charging protocol; and when the first electronic device and the second electronic device successfully negotiate the fast charging protocol, obtaining, by the first electronic device, the charging request of the second electronic device.

In a possible implementation, the method further includes: When the first electronic device and the second electronic device fail to negotiate the fast charging protocol, the first electronic device supplies power to the second electronic device based on a preset charging voltage and a preset charging current.

It may be understood that, in this application, the preset charging voltage and the preset charging current may be an initial voltage and an initial current that are preset in the first electronic device in this application.

In a possible implementation, the method further includes: determining that the first electronic device is in a third running state, and supplying power to the second electronic device based on the preset charging voltage and the preset charging current, where the third running state includes at least one of the following:
a status of the first electronic device is abnormal; a voltage of the first electronic device is less than a first preset voltage threshold; a remaining battery level of the first electronic device is less than a first preset battery level threshold; and a temperature of the first electronic device exceeds a first preset temperature threshold.

It may be understood that the abnormal state of the first electronic device may be that a host of the first electronic device is abnormal. The first preset voltage threshold, the first preset battery level threshold, and the first preset temperature threshold may be set based on an actual situation, and this is not specifically limited herein.

According to a second aspect, an embodiment of this application provides an electronic device, and the electronic device includes: a memory, configured to store instructions executed by one or more processors of the electronic device, and the processor, one of the one or more processors of the electronic device, configured to implement the charging method provided in any one of the first aspect and the possible implementations of the first aspect.

According to a third aspect, an embodiment of this application provides a readable medium, where the readable medium stores instructions, and when the instructions are executed on an electronic device, the electronic device is enabled to implement the charging method according to any one of the first aspect and the possible implementations of the first aspect.

### BRIEF DESCRIPTION OF DRAWINGS

FIG. 1 is a diagram of an electronic device charging scenario according to some embodiments of this application;
FIG. 2 is a diagram of an electronic device charging scenario according to some embodiments of this application;
FIG. 3 is a schematic flowchart of a charging method according to some embodiments of this application;
FIG. 4 is a diagram of a structure of a charging device according to some embodiments of this application;
FIG. 5 is a diagram of a structure of a charging device according to some embodiments of this application;
FIG. 6 is a diagram of a structure of a charging circuit according to some embodiments of this application;
FIG. 7 is a diagram of a charging method according to some embodiments of this application;
FIG. 8 is a diagram of a charging method according to some embodiments of this application;
FIG. 9 is a diagram of a charging method according to some embodiments of this application; and
FIG. 10 is a diagram of a structure of a charging device according to some embodiments of this application.

### DESCRIPTION OF EMBODIMENTS

Illustrative embodiments of this application include but are not limited to a charging method, a device, and a medium.

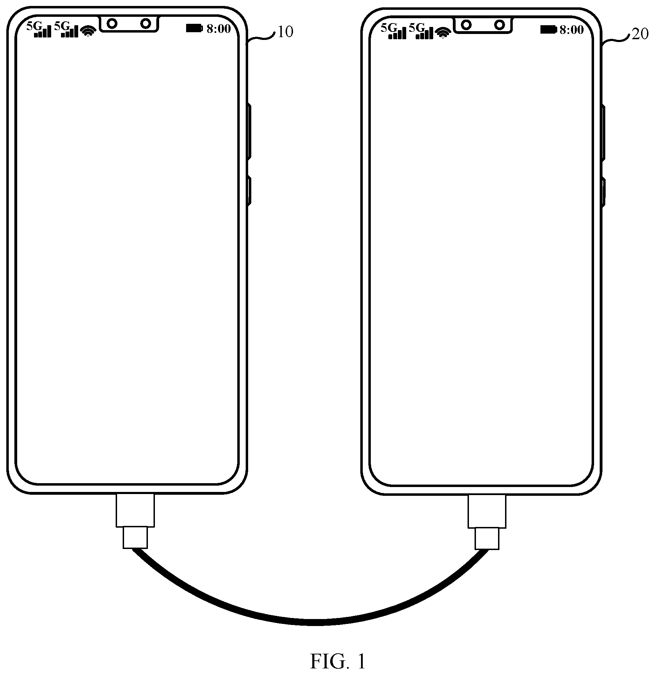

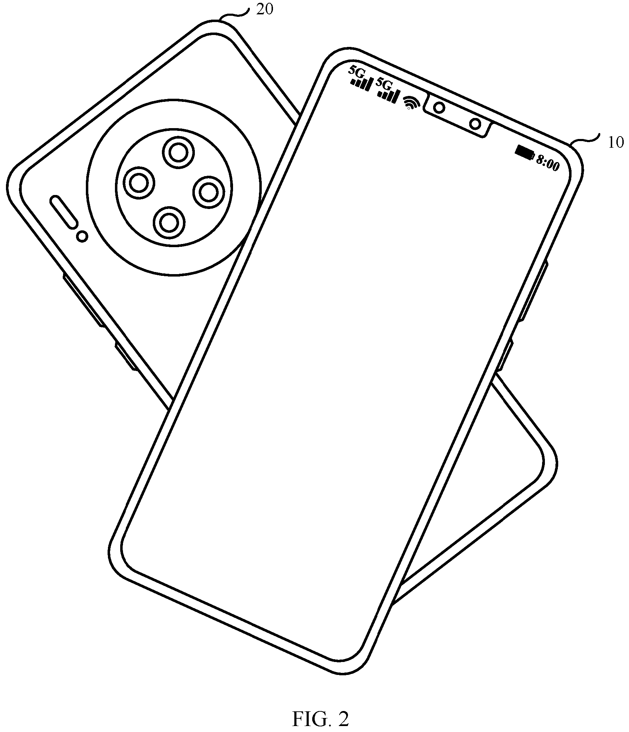

It may be understood that the technical solutions of this application are applicable to a scenario in which charging is performed between a first electronic device and a second electronic device. The first electronic device mentioned in embodiments of this application may be a device that supplies power, and the second electronic device may be a device that receives the power supplied by the first electronic device. For example, as shown in FIG. 1, the first electronic device may be a mobile phone 10, and the second electronic device may be a mobile phone 20. When the mobile phone 10 charges the mobile phone 20, the mobile phone 10 may establish a connection to the mobile phone 20 in a wired connection manner, for example, through a data cable, so that the mobile phone 10 charges the mobile phone 20. In some embodiments, as shown in FIG. 2, the mobile phone 10 may alternatively establish a connection to the mobile phone 20 in a wireless connection manner, so that the mobile phone 10 charges the mobile phone 20.

As described above, in some embodiments, in a reverse charging process of an electronic device, a source end device (namely, a device that supplies power) constantly uses a voltage and a current that are requested by a receive end device (namely, a to-be-charged device) as a voltage and a current for supplying power to the receive end device. Consequently, in some cases, normal running of the source end device is affected, and user experience is degraded.

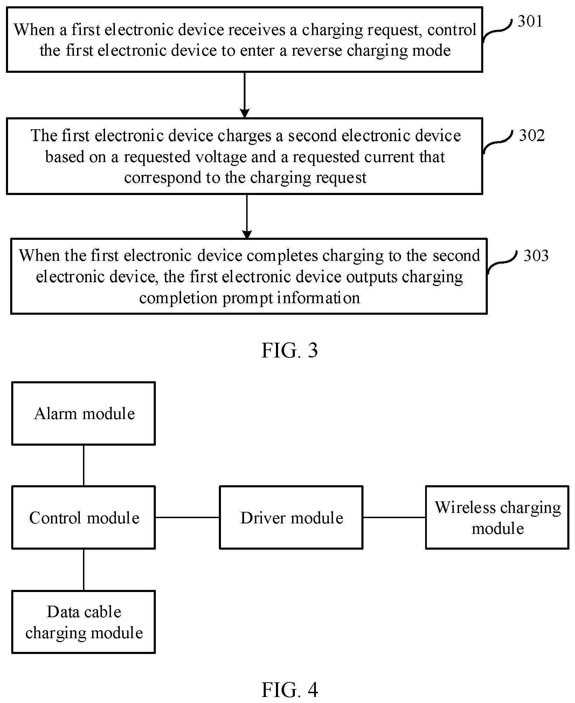

For example, FIG. 3 is a schematic flowchart of a charging method according to some embodiments. The charging method shown in FIG. 3 may be performed by the first electronic device shown in FIG. 4. As shown in FIG. 4, the first electronic device may include a control module, an alarm module, a data cable charging module, a driver module, and a wireless charging module. The charging method includes: when the control module of the first electronic device receives a charging request sent by the second electronic device to the first electronic device, controlling the first electronic device to enter a reverse charging mode, where the charging request carries a voltage and a current that are requested by the second electronic device. The control module controls the data cable charging module or drives, by using the driver module, the wireless charging module to charge the second electronic device based on the voltage and the current that are requested by the second electronic device. When the control module determines that the first electronic device completes charging to the second electronic device, the alarm module is controlled to output charging completion prompt information.

In the foregoing charging method, in a reverse charging process, the first electronic device constantly charges the second electronic device based on the voltage and the current that are requested by the second electronic device in the charging process. As a result, in some cases, a temperature of the first electronic device is excessively high, an application of the first electronic device cannot run, and the like. For example, in some cases, the first electronic device is running a large mobile game. In this case, the first electronic device charges the second electronic device based on the voltage and the current that are requested by the second electronic device, causing a sharp increase in a temperature of the first electronic device. In some cases, a remaining battery level of the first electronic device is already low, for example, the remaining battery level is 5%. In this case, the first electronic device still charges the second electronic device based on the voltage and the current that are requested by the second electronic device. Consequently, some applications of the first electronic device cannot run or the first electronic device is powered off. This degrades user experience.

To resolve the foregoing problems, an embodiment of this application provides a charging method. In a reverse charging process, the first electronic device may adjust a current in the reverse charging process in real time based on a real-time running state of the first electronic device. The real-time running state of the first electronic device may include states in various aspects such as a current remaining battery level, a current battery voltage, current system power consumption, a current battery temperature, and a current running application state of the first electronic device. In this way, power supply to the second electronic device can be implemented in a case in which normal running of the first electronic device is ensured. This improves user experience.

In some embodiments, a manner of the adjusting a current in the reverse charging process in real time based on a real-time running state of the first electronic device may be: The first electronic device obtains the current in the reverse charging process based on the current requested by the second electronic device and the real-time running state of the first electronic device.

In some embodiments, a manner in which the first electronic device obtains the current in the reverse charging process based on the current requested by the second electronic device and the real-time running state of the first electronic device may be: The first electronic device obtains available output currents that respectively correspond to the running states in the various aspects (various dimensions), for example, obtains an available output current I1 corresponding to the current remaining battery level, an available output current I2 corresponding to the current battery voltage, an available output current I3 corresponding to the current system power consumption, an available output current I4 corresponding to the current battery temperature, and an available output current I5 corresponding to the current running application state. When the current requested by the second electronic device is less than or equal to a smallest available output current in the foregoing available output currents (that is, when the running state of the first electronic device is a first running state mentioned in this application), the current requested by the second electronic device is used as the current in the reverse charging process. When the current requested by the second electronic device is greater than a smallest available output current in the foregoing available output currents (that is, when the running state of the first electronic device is a second running state mentioned in this application), the smallest available output current in the available output currents is used as the current in the reverse charging process.

In some embodiments, the first electronic device may use the voltage requested by the second electronic device as a voltage in the reverse charging process.

It may be understood that, in this embodiment of this application, when the voltage requested by the second electronic device is used as the voltage in the reverse charging process, an error may be allowed. For example, the error may be within a preset threshold, for example, the preset threshold may be 0.1 V. In other words, a voltage within a specified error range from the voltage requested by the second electronic device may be used as the voltage in the reverse charging process. It may be understood that equality described in another part of this application may also be understood as "not absolute equality", and an error is allowed.

The following first describes a structure of an electronic device mentioned in this application. Both the first electronic device and the second electronic device mentioned in embodiments of this application may be any one of electronic devices such as a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, and a personal digital assistant (personal digital assistant, PDA).

The following describes structures of the first electronic device and the second electronic device by using an example in which both the first electronic device and the second electronic device are mobile phones.

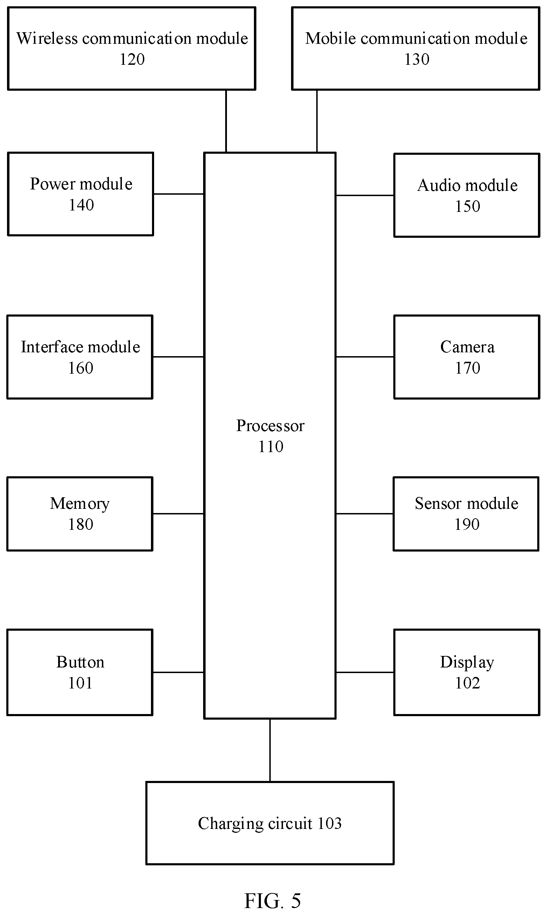

As shown in FIG. 5, a mobile phone may include a processor 110, a power module 140, a memory 180, a mobile communication module 130, a wireless communication module 120, a sensor module 190, an audio module 150, a camera 170, an interface module 160, a button 101, a display 102, a charging circuit 103, and the like.

It can be understood that the structure shown in this embodiment of the present invention does not constitute a specific limitation on the mobile phone. In some other embodiments of this application, the mobile phone may include more or fewer components than those shown in the figure, or combine some components, or split some components, or have different component arrangements. The components shown in the figure may be implemented by hardware, software, or a combination of software and hardware.

The processor 110 may include one or more processing units, for example, may include a processing module or a processing circuit such as a central processing unit (central processing unit, CPU), a graphics processing unit (graphics processing unit, GPU), a digital signal processor (digital signal processor, DSP), a microprocessor (micro-programmed control unit, MCU), an artificial intelligence (artificial intelligence, AI) processor, or a programmable logic device (field programmable gate array, FPGA). Different processing units may be independent components, or may be integrated into one or more processors. A storage unit may be disposed in the processor 110, and is configured to store instructions and data. In some embodiments, the storage unit in the processor 110 is a cache 180.

It may be understood that the charging method in embodiments of this application may be performed by the processor 110 of a corresponding electronic device.

The power module 140 may include a power supply, a power management component, and the like. The power supply may be a battery. The power management component is configured to manage charging of the power supply and power supply of the power supply to another module. In some embodiments, the power management component includes a charging management module and a power management module. The charging management module is configured to receive a charging input from a charger. The power management module is configured to connect to the power supply, the charging management module, and the processor 110. The power management module receives an input from the power supply and/or the charging management module, and supplies power to the processor 110, the display 102, the camera 170, the wireless communication module 120, and the like.

The mobile communication module 130 may include but is not limited to an antenna, a power amplifier, a filter, a low noise amplifier (low noise amplifier, LNA), and the like. The mobile communication module 130 may provide a wireless communication solution that is applied to the mobile phone and that includes 2G/3G/4G/5G or the like. The mobile communication module 130 may receive an electromagnetic wave through the antenna, perform processing such as filtering or amplification on the received electromagnetic wave, and transmit the electromagnetic wave to a modem processor for demodulation. The mobile communication module 130 may further amplify a signal modulated by the modem processor, and convert the signal into an electromagnetic wave for radiation through the antenna. In some embodiments, at least some functional modules of the mobile communication module 130 may be disposed in the processor 110. In some embodiments, at least some functional modules of the mobile communication module 130 and at least some modules of the processor 110 may be disposed in a same component.

The wireless communication module 120 may include an antenna. The wireless communication module 120 may provide a wireless communication solution that is applied to the mobile phone and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The mobile phone may communicate with a network and another device by using a wireless communication technology.

In some embodiments, the mobile communication module 130 and the wireless communication module 120 that are of the mobile phone may alternatively be located in a same module.

The display 102 is configured to display a man-machine interaction interface, an image, a video, and the like. The display 102 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a quantum dot light emitting diode (quantum dot light emitting diode, QLED), or the like.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 150 is configured to convert digital audio information into an analog audio signal for output, or convert an analog audio input into a digital audio signal. The audio module 150 may be further configured to encode and decode an audio signal. In some embodiments, the audio module 150 may be disposed in the processor 110, or some functional modules of the audio module 150 are disposed in the processor 110. In some embodiments, the audio module 150 may include a speaker, an earpiece, a microphone, and a headset jack. The camera 170 is configured to capture a static image or a video. An optical image of an object is generated through a lens, and is projected onto a photosensitive element. The photosensitive element converts an optical signal into an electrical signal, and then transfers the electrical signal to an image signal processor (image signal processor, ISP). The image signal processor converts the electrical signal into a digital image signal. The mobile phone may implement a photographing function by using an ISP, the camera 170, a video codec, a graphics processing unit (graphic processing unit, GPU), the display 102, an application processor, and the like.

The interface module 160 includes an external memory interface, a USB interface, a subscriber identity module (subscriber identity module, SIM) card interface, and the like. The external memory interface may be configured to connect to an external memory card, for example, a micro SD card, to expand a storage capability of the mobile phone. The external memory card communicates with the processor 110 through the external memory interface, to implement a data storage function. A universal serial bus interface is configured for communication between the mobile phone and another electronic device. The subscriber identity module card interface is configured to communicate with a SIM card installed in the mobile phone, for example, read a phone number stored in the SIM card, or write a phone number into the SIM card.

In some embodiments, the mobile phone further includes the button 101, a motor, an indicator, and the like. The button 101 may include a volume button, a power on/off button, and the like. The motor is configured to enable the mobile phone to generate vibration effect, for example, generate vibration when the mobile phone of a user is called, to prompt the user to answer an incoming call of the mobile phone. The indicator may include a laser indicator, a radio frequency indicator, an LED indicator, and the like.

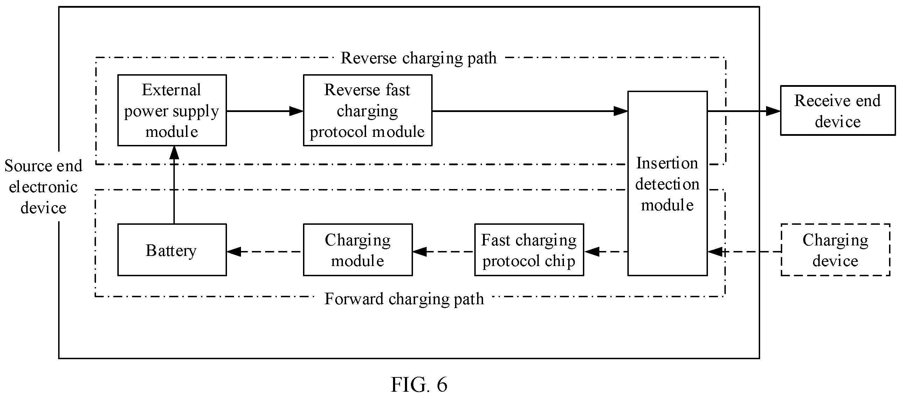

In some embodiments, as shown in FIG. 6, the charging circuit 103 may include a reverse charging path and a forward charging path. The reverse charging path includes an external power supply module, a reverse fast charging protocol module, and an insertion detection module. The forward charging path may include a battery, a charging module (buck/sc), a fast charging protocol chip, and the insertion detection module. The following describes functions of each module.

In this embodiment of this application, the external power supply module may be configured to supply power to a receive end device through a data cable or in an electromagnetic induction manner.

In this embodiment of this application, the reverse fast charging protocol module may be configured to establish a communication connection to a receive end electronic device through a data cable or in a wireless connection manner.

In this embodiment of this application, the insertion detection module may be configured to determine whether an electronic device is a source end device or the receive end device. For example, when it is identified that the electronic device is a source end identifier (for example, host/source), it is determined that the electronic device is the source end device, and the electronic device is controlled to supply power externally. When it is identified that the electronic device is a receive end identifier (for example, device/sink), it is determined that the electronic device is the receive end device, and is configured to receive power supplied by a charging device.

In this embodiment of this application, the fast charging protocol chip may be configured to establish a charging connection to the charging device through a data cable or in a wireless connection manner.

In this embodiment of this application, the charging module (buck/sc) may be configured to: receive a voltage and a current that are provided by the charging device, and store the voltage and the current in the battery.

In this embodiment of this application, the battery may be configured to store a charge, and is configured to supply power externally.

Optionally, the foregoing components are merely examples. During actual application, components in the foregoing modules may be added or deleted according to an actual requirement. FIG. 5 and FIG. 6 should not be understood as a limitation on embodiments of this application.

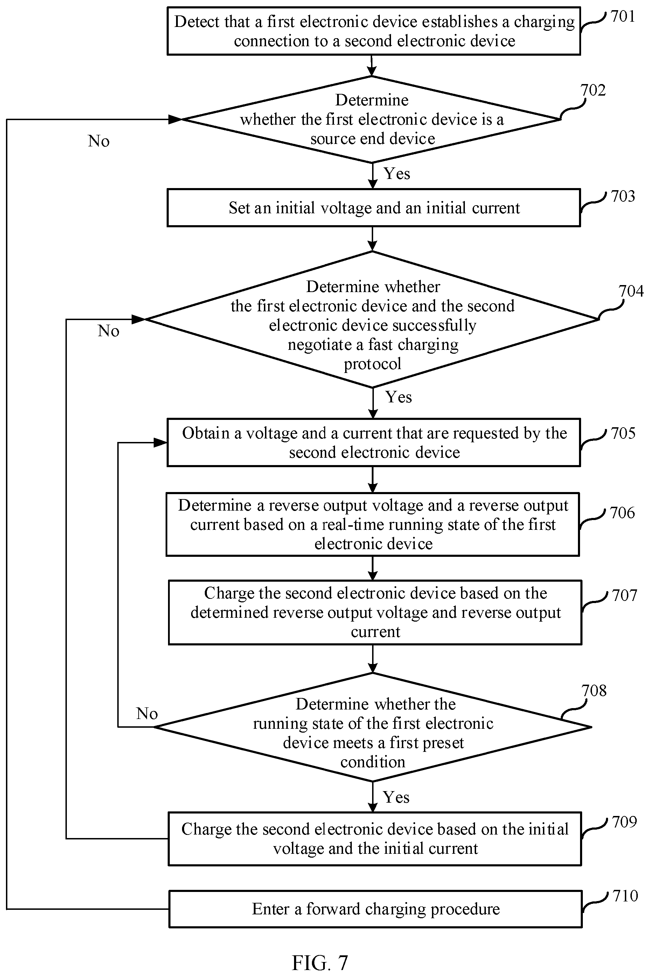

The following describes in detail the charging method provided in embodiments of this application. FIG. 7 is a schematic flowchart of a charging method according to an embodiment of this application. The charging method may be performed by a first electronic device, and the charging method includes the following steps.

701: Detect that the first electronic device establishes a charging connection to a second electronic device.

It may be understood that, in some embodiments, the charging connection established between the first electronic device and the second electronic device may be a wired connection established in any manner, for example, through a data cable. For example, as shown in FIG. 1, the first electronic device establishes a connection to the second electronic device through a universal serial bus (universal serial bus, USB) data cable, and transmits a current through the USB data cable.

In some embodiments, the charging connection established between the first electronic device and the second electronic device may alternatively be a wireless connection. For example, as shown in FIG. 2, the first electronic device may establish a connection to the second electronic device in a wireless manner, for example, through Bluetooth, an infrared ray, or wireless fidelity (wireless fidelity, Wi-Fi). For example, the first electronic device and the second electronic device establish a connection to each other after finding each other in a same Wi-Fi coverage area or a coverage area of short-distance communication such as Bluetooth, and charging is performed by using an electromagnetic signal.

It may be understood that this embodiment of this application is not limited to establishing a charging connection between two electronic devices, and a charging connection may alternatively be established between one electronic device and a plurality of devices.

702: Determine whether the first electronic device is a source end device.

If a determining result is that the first electronic device is a source end device, it indicates that the first electronic device charges the second electronic device in this case, and 703 "set an initial voltage and an initial current" is performed. If a determining result is that the first electronic device is not a source end device, the second electronic device charges the first electronic device in this case, and 710 "enter a forward charging procedure" is performed.

It may be understood that, in this embodiment of this application, after the first electronic device establishes the charging connection to the second electronic device, the first electronic device may identify, by using an insertion detection module, whether the first electronic device is a source end device.

For example, when the insertion detection module of the first electronic device identifies that the first electronic device has a source end identifier (for example, host/source), it may be determined that the first electronic device is a source end device. In this case, a charging type of the first electronic device is reverse charging, and the first electronic device is configured to charge the second electronic device. In this case, the second electronic device may be any terminal electronic device such as a mobile phone or a watch. When the insertion detection module of the first electronic device identifies that the first electronic device has a receive end identifier (for example, device/sink), it may be determined that the first electronic device is a receive end device. In this case, a charging type is forward charging, and the first electronic device is configured to receive charging from the second electronic device. In this case, the second electronic device may be a terminal electronic device, or may be a conventional charging device such as a socket or a power bank.

703: Set an initial voltage and an initial current.

In some embodiments, the initial voltage and the initial current may be fixed values that are preset in the first electronic device. For example, the preset initial voltage = 5 V, and the preset initial current = 500 mA; or the preset initial voltage = 5 V, and the preset initial current = 1 A.

704: Determine whether the first electronic device and the second electronic device successfully negotiate a fast charging protocol. If a determining result is that the first electronic device and the second electronic device successfully negotiate the fast charging protocol, 705 "obtain a voltage and a current that are requested by the second electronic device" is performed; or if a determining result is that the first electronic device and the second electronic device fail to negotiate the fast charging protocol, 709 "charge the second electronic device based on the initial voltage and the initial current" is performed.

In this embodiment of this application, when reverse charging starts, after the initial external power supply voltage and current are set, a reverse fast charging protocol module of the first electronic device may perform a communication handshake with a fast charging protocol module of the second electronic device. If it is determined that the handshake and identification of the fast charging protocol are succeeded, it is determined that the second electronic device supports a corresponding fast charging protocol, and the first electronic device may obtain the voltage and the current that are requested by the second electronic device.

If the second electronic device does not initiate a protocol handshake, or identification of the fast charging protocol fails, it is determined that the first electronic device charges the second electronic device through a common reverse charging procedure, that is, the first electronic device charges the second electronic device based on the initial voltage and the initial current.

705: Obtain a voltage and a current that are requested by the second electronic device.

In this embodiment of this application, the second electronic device may send the requested voltage and current to the first electronic device in a wired or wireless manner. In some embodiments, the voltage and the current that are requested by the second electronic device from the first electronic device may be a voltage and a current that are preset in the fast charging protocol of the second electronic device. In addition, the voltage and the current that are preset in the fast charging protocol are usually a high voltage and a high current. For example, the voltage that is preset in the fast charging protocol may be any voltage ranging from 8 V to 10 V, and the preset current may be any current ranging from 1.5 A to 2.5 A. For example, the preset voltage of the second electronic device is 8.8 V, and the preset current is 2.5 A. It may be understood that the voltage and the current that are preset in the fast charging protocol are merely examples for description, and may be specifically determined based on hardware specifications of the second electronic device.

706: Determine a reverse output voltage and a reverse output current based on a real-time running state of the first electronic device.

In this embodiment of this application, the real-time running state of the first electronic device may include states in various aspects such as a current remaining battery level, a current battery voltage, current system power consumption, a current battery temperature, and a current running application state of the first electronic device.

In this embodiment of this application, a manner of determining the reverse output voltage and the reverse output current based on the real-time running state of the first electronic device includes: The first electronic device uses the voltage requested by the second electronic device as the voltage in the reverse charging process. The first electronic device obtains available output currents that respectively correspond to the running states in the various aspects, for example, obtains an available output current I1 corresponding to the current remaining battery level, an available output current I2 corresponding to the current battery voltage, an available output current I3 corresponding to the current system power consumption, an available output current I4 corresponding to the current battery temperature, and an available output current I5 corresponding to the current running application state. When the current requested by the second electronic device is less than or equal to a smallest available output current in the foregoing available output currents, the first electronic device uses the current requested by the second electronic device as the current in the reverse charging process. When the current requested by the second electronic device is greater than a smallest available output current in the foregoing available output currents, the first electronic device uses the smallest current in the foregoing currents as the current in the reverse charging process.

The following describes a manner of determining, based on real-time running states in the various aspects of the first electronic device, the available output currents corresponding to the various aspects.

In this embodiment of this application, states such as a remaining battery level, a battery voltage, system power consumption, a battery temperature, and a current running application state of the first electronic device may be classified into several levels in advance, then levels corresponding to the current remaining battery level, the current battery voltage, the current system power consumption, the current battery temperature, and the current running application state are separately determined, and corresponding reverse charging currents are separately determined based on the levels corresponding to the current remaining battery level, the current battery voltage, the current system power consumption, the current battery temperature, and the current running application state.

For example, for a battery level, a remaining battery level ranging from 80% to 100% may be classified as a first level, and a reverse charging current corresponding to the first level is preset to 2.5 A; a remaining battery level ranging from 70% to 80% may be classified as a second level, and a reverse charging current corresponding to the second level is preset to 2.2 A; and a remaining battery level ranging from 40% to 70% may be classified as a third level, and a reverse charging current corresponding to the third level is preset to 1.7 A.

For example, when it is obtained that the current remaining battery level of the first electronic device is 75%, it may be determined that the level corresponding to the current remaining battery level is the second level, and the available reverse charging output current I1 corresponding to the current level = 2.2 A.

For a battery voltage, a remaining battery voltage ranging from 4.3 V to 4.5 V may be classified as a first level, and a reverse charging current corresponding to the first level is preset to 2.5 A; a remaining battery voltage ranging from 4 V to 4.3 V may be classified as a second level, and a reverse charging current corresponding to the second level is preset to 2.2 A; and a remaining battery voltage ranging from 3.7 V to 4.3 V may be classified as a third level, and a reverse charging current corresponding to the third level is preset to 1.7 A.

For example, when it is obtained that the current battery voltage of the first electronic device is 4.4 V, it may be determined that the level corresponding to the current battery voltage is the first level, and the available reverse charging output current I2 corresponding to the current level = 2.5 A.

For system power consumption, system power consumption ranging from 0 W to 2 W during operation may be classified as a first level, and a reverse charging current corresponding to the first level is preset to 2.5 A; system power consumption ranging from 2 W to 4 W during operation may be classified as a second level, and a reverse charging current corresponding to the second level is preset to 2.2 A; and system power consumption ranging from 4 W to 8 W during operation may be classified as a third level, and a reverse charging current corresponding to the third level is preset to 1.7 A.

For example, when it is obtained that the current system power consumption of the first electronic device is 3 W, it may be determined that the level corresponding to the current system power consumption is the second level, and the available reverse charging output current I3 corresponding to the current level = 2.2 A.

For a battery temperature, a battery temperature less than 33°C may be classified as a first level, and a reverse charging current corresponding to the first level is preset to 2.5 A; a battery temperature ranging from 33°C to 35°C may be classified as a second level, and a reverse charging current corresponding to the second level is preset to 2.2 A; a battery temperature ranging from 35°C to 37°C may be classified as a third level, and a reverse charging current corresponding to the third level is preset to 2 A; a battery temperature ranging from 37°C to 39°C may be classified as a fourth level, a reverse charging current corresponding to the fourth level is preset to 1.8 A, and a battery temperature greater than 39°C may be classified as a fifth level, and a reverse charging current corresponding to the fifth level is preset to 1.3 A.

For example, when it is obtained that the current battery temperature of the first electronic device is 34°C, it may be determined that the level corresponding to the current battery temperature is the second level, and the available reverse charging output current I4 corresponding to the current level = 2.2 A. The system power consumption = total battery output power - external reverse charging power.

For a current running application state, a started application that does not include a high-power-consumption application may be classified as a first level, and a reverse charging current corresponding to the first level is preset to 2.5 A; and a started application that includes a high-power-consumption application may be classified as a second level, and a reverse charging current corresponding to the second level is preset to 1.7 A. The high-power-consumption application may include a high-power-consumption application such as a game application, a video application, or a camera application.

For example, when it is obtained that the first electronic device currently starts only a music application, it may be determined that the level corresponding to the current running application state is the first level, and the available reverse charging output current I5 corresponding to the current level = 2.5 A.

In some embodiments, corresponding reverse charging currents may alternatively be set for screen-on and screen-off. For example, screen-off is set as a first level, and a reverse charging current corresponding to the first level is preset to 2.5 A. Screen-on is set as a second level, and a reverse charging current corresponding to the second level is preset to 1.7 A.

In this embodiment of this application, the requested voltage 8.8 V of the second electronic device may be used as the reverse output voltage. It may be determined, based on the foregoing available reverse charging output current, that the currently available output current of the first electronic device is 2.2 A. It may be determined based on the currently available output current 2.2 A and the requested current 2.5 A of the second electronic device that the reverse output current is 2.2 A.

In some embodiments, a smallest value of the available reverse charging output current corresponding to any one or more of the states such as the remaining battery level, the battery voltage, the system power consumption, the battery temperature, and the current running application state of the first electronic device may be used as the currently available output current of the first electronic device.

When the currently available output current of the first electronic device is greater than or equal to the current requested by the second electronic device, it is determined that the first electronic device is in a first running state, the first electronic device uses the voltage requested by the second electronic device as the reverse output voltage, and the first electronic device uses the current requested by the second electronic device as the reverse output current.

When the currently available output current of the first electronic device is less than the current requested by the second electronic device, it is determined that the first electronic device is in a second running state, the first electronic device uses the voltage requested by the second electronic device as the reverse output voltage, and the first electronic device uses the currently available output current as the reverse output current, to ensure normal running of the first electronic device.

707: Charge the second electronic device based on the determined reverse output voltage and reverse output current.

It may be understood that in this embodiment of this application, an external power supply module of the first electronic device may charge the second electronic device based on the determined reverse output voltage and reverse output current.

708: Determine whether the running state of the first electronic device meets a first preset condition. If a determining result is that the running state of the first electronic device meets the first preset condition, 709 "charge the second electronic device based on the initial voltage and the initial current" is performed; or if a determining result is that the running state of the first electronic device does not meet the first preset condition, 705 "obtain a voltage and a current that are requested by the second electronic device" is performed.

In this embodiment of this application, the first preset condition may include at least one of the following: a host of the first electronic device is abnormal; a host voltage of the first electronic device is less than a first preset voltage threshold; a remaining battery level of the first electronic device is less than a first preset battery level threshold; and a temperature of the first electronic device exceeds a first preset temperature threshold.

It may be understood that, when the first electronic device meets the first preset condition, it is determined that the first electronic device is in a third running state, and in this case, the first electronic device cannot continuously provide high-power fast charging with a high voltage and a high current to the second electronic device. Therefore, to ensure normal use of functions of the first electronic device, in this case, the output voltage is adjusted to the initial voltage, the output current is adjusted to the initial current, and the common reverse charging procedure is performed.

In some embodiments, when it is determined that the first electronic device meets the first preset condition, the first electronic device may stop charging the second electronic device.

709: Charge the second electronic device based on the initial voltage and the initial current.

In some embodiments, in a process in which the first electronic device charges the second electronic device based on the initial voltage and the initial current, when it is determined that the first electronic device meets a second preset condition, the first electronic device stops charging the second electronic device.

In this embodiment of this application, the second preset condition may include at least one of the following: a host voltage of the first electronic device is less than a second preset voltage threshold; a remaining battery level of the first electronic device is less than a second preset battery level threshold; and a temperature of the first electronic device exceeds a second preset temperature threshold.

710: Enter a forward charging procedure.

It may be understood that, in the forward charging procedure, the first electronic device may receive power supplied by the second electronic device. In this case, the second electronic device may be a terminal electronic device, or may be a conventional charging device such as a socket or a power bank.

In this embodiment of this application, the first electronic device adjusts, based on the real-time running state, the voltage and the current that are output to the second electronic device, so that power supply to the second electronic device can be implemented in a case in which normal running of the first electronic device is ensured, to avoid cases in which a temperature of the first electronic device is excessively high, an application of the first electronic device cannot run, and the like. This improves user experience.

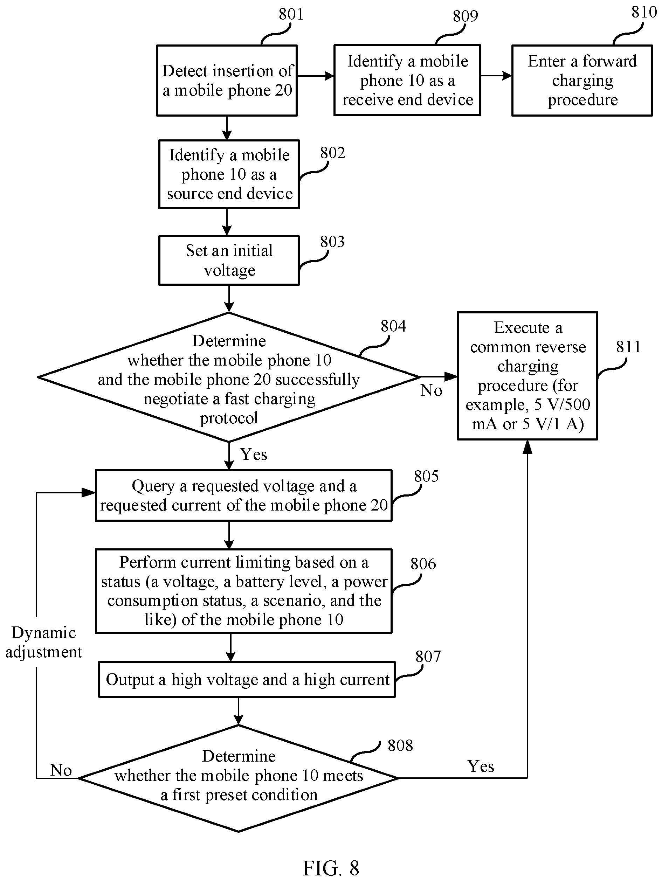

FIG. 8 is a schematic flowchart of a charging method according to an embodiment of this application. FIG. 8 is different from FIG. 7 in that an example in which the first electronic device is a mobile phone 10 and the second electronic device is a mobile phone 20 is used to describe the charging method provided in this application. The method shown in FIG. 8 may be performed by the mobile phone 10. As shown in FIG. 8, the charging method includes the following steps.

801: Detect insertion of the mobile phone 20.

In this embodiment of this application, as shown in FIG. 1, the mobile phone 20 may establish a charging connection to the mobile phone 10 through a data cable. After detecting the insertion of the mobile phone 20, an insertion detection module of the mobile phone 10 may automatically identify an identifier of the mobile phone 10, to determine whether the mobile phone 10 is a source end device.

802: Identify the mobile phone 10 as a source end device.

It may be understood that when the mobile phone 20 needs power supplied by the mobile phone 10, and the insertion detection module of the mobile phone 10 identifies that the mobile phone 10 has a source end identifier (for example, source), it may be proved that the mobile phone 10 is a source end device. In other words, the mobile phone 10 enters a reverse charging mode.

803: Set an initial voltage.

In this embodiment of this application, an external power supply module of the mobile phone 10 may set the initial voltage to 5 V to supply power to the mobile phone 20. In some embodiments, the external power supply module of the mobile phone 10 may alternatively set the initial voltage to 3 V to supply power to the mobile phone 20.

In some embodiments, an initial current may be further set to 500 mA or 1 A to supply power to the mobile phone 20.

804: Determine whether the mobile phone 10 and the mobile phone 20 successfully negotiate a fast charging protocol. If a determining result is that the mobile phone 10 and the mobile phone 20 successfully negotiate the fast charging protocol, 805 "query a requested voltage and a requested current of the mobile phone 20" is performed; or if a determining result is that the mobile phone 10 and the mobile phone 20 fail to negotiate the fast charging protocol, 811 "execute a common reverse charging procedure" is performed.

In this embodiment of this application, when reverse charging starts, after the mobile phone 10 sets the initial external power supply voltage and current, a reverse fast charging protocol module of the mobile phone 10 may perform a communication handshake with a fast charging protocol module of the mobile phone 20. If it is determined that the handshake and identification of the fast charging protocol succeed, it is determined that the mobile phone 20 supports a corresponding fast charging protocol, and the mobile phone 10 may query the requested voltage and the requested current of the mobile phone 20.

If the mobile phone 20 does not initiate a protocol handshake, or identification of the fast charging protocol fails, it is determined that the mobile phone 10 charges the mobile phone 20 through a common reverse charging procedure, that is, the mobile phone 10 charges the mobile phone 20 based on the initial voltage and the initial current.

805: Query a requested voltage and a requested current of the mobile phone 20.

In this embodiment of this application, the mobile phone 20 may send the requested voltage and the requested current to the mobile phone 10 in a wired manner. In some embodiments, the voltage and the current that are requested by the mobile phone 20 from the mobile phone 10 may be a voltage and a current that are preset in the fast charging protocol of the mobile phone 20. In addition, the voltage and the current that are preset in the fast charging protocol are usually a high voltage and a high current. For example, the voltage and the current that are preset in the fast charging protocol may be 8.8 V and 2.5 A.

806: Perform current limiting based on a status (a voltage, a battery level, a power consumption status, a scenario, and the like) of the mobile phone 10.

In this embodiment of this application, performing current limiting based on the status of the mobile phone 10 may be determining a reverse output voltage and a reverse output current based on a real-time running state of the mobile phone 10.

In this embodiment of this application, the real-time running state of the mobile phone 10 may include states in various aspects such as a current remaining battery level, a current battery voltage, current system power consumption, a current battery temperature, and a current running application state of the mobile phone 10.

In this embodiment of this application, a manner of determining the reverse output voltage and the reverse output current based on the real-time running state of the mobile phone 10 includes: The mobile phone 10 uses the voltage requested by the mobile phone 20 as a voltage in a reverse charging process. The mobile phone 10 obtains available output currents that respectively correspond to the running states in the various aspects, for example, obtains an available output current I1 corresponding to the current remaining battery level, an available output current I2 corresponding to the current battery voltage, an available output current I3 corresponding to the current system power consumption, an available output current I4 corresponding to the current battery temperature, and an available output current I5 corresponding to the current running application state. When the current requested by the mobile phone 20 is less than or equal to a smallest available output current in the foregoing available output currents, the mobile phone 10 uses the current requested by the mobile phone 20 as the current in the reverse charging process. When the current requested by the mobile phone 20 is greater than a smallest current in the foregoing currents, the mobile phone 10 uses the smallest available output current in the foregoing available output currents as the current in the reverse charging process.

807: Output a high voltage and a high current.

It may be understood that, in this embodiment of this application, the external power supply module of the mobile phone 10 may charge the mobile phone 20 based on the determined reverse output voltage and reverse output current. The determined reverse output voltage and reverse output current are usually a high voltage and a high current.

808: Determine whether the mobile phone 10 meets a first preset condition. If a determining result is that the mobile phone 10 meets the first preset condition, 811 "execute a common reverse charging procedure" is performed; or if a determining result is that the mobile phone 10 does not meet the first preset condition, 805 "query a requested voltage and a requested current of the mobile phone 20" is performed, to dynamically adjust the output current.

In this embodiment of this application, the first preset condition may include at least one of the following: a host of the mobile phone 10 is abnormal; a host voltage of the mobile phone 10 is less than a first preset voltage threshold; a remaining battery level of the mobile phone 10 is less than a first preset battery level threshold; and a temperature of the mobile phone 10 exceeds a first preset temperature threshold.

It may be understood that, when the mobile phone 10 meets the first preset condition, it is determined that the mobile phone 10 cannot continuously provide high-power fast charging with a high voltage and a high current to the mobile phone 20. Therefore, to ensure normal use of functions of the mobile phone 10, in this case, the output voltage is adjusted to the initial voltage, the output current is adjusted to the initial current, and the common reverse charging procedure is performed.

In some embodiments, when the mobile phone 10 meets the first preset condition, the mobile phone 10 may alternatively stop charging the mobile phone 20.

809: Identify the mobile phone 10 as a receive end device.

It may be understood that, in this embodiment of this application, when the insertion detection module of the mobile phone 10 identifies that the mobile phone 10 has a receive end identifier (for example, sink), it may be proved that the mobile phone 10 is a receive end device. In other words, the mobile phone 10 enters a forward charging mode, and performs a forward charging procedure.

810: Enter the forward charging procedure.

811: Execute a common reverse charging procedure (for example, 5 V/500 mA or 5 V/1 A).

In this embodiment of this application, in the common reverse charging procedure, the mobile phone 10 may supply power to the mobile phone 20 based on the initial voltage and the initial current by using the external power supply module. For example, the mobile phone 10 may supply power to the mobile phone 20 based on 5 V/500 mA or 5 V/1 A by using the external power supply module.

In some embodiments, in a process in which the mobile phone 10 charges the mobile phone 20 based on the initial voltage and the initial current, when it is determined that the mobile phone 10 meets a second preset condition, the mobile phone 10 may stop charging the mobile phone 20.

In this embodiment of this application, the second preset condition may include at least one of the following: a host voltage of the mobile phone 10 is less than a second preset voltage threshold; a remaining battery level of the mobile phone 10 is less than a second preset battery level threshold; and a temperature of the mobile phone 10 exceeds a second preset temperature threshold.

In this embodiment of this application, the mobile phone 10 adjusts, based on the real-time running state, the voltage and the current that are output to the mobile phone 20, so that power is supplied to the mobile phone 20 without affecting normal use of the mobile phone 10, to avoid cases in which a temperature of the mobile phone 10 is excessively high, a large current causes an abnormality such as shutting down of the mobile phone 10 as a consequence of an excessively low battery voltage (less than a power-on threshold), a user cannot use the mobile phone 10, and the like. This improves user experience.

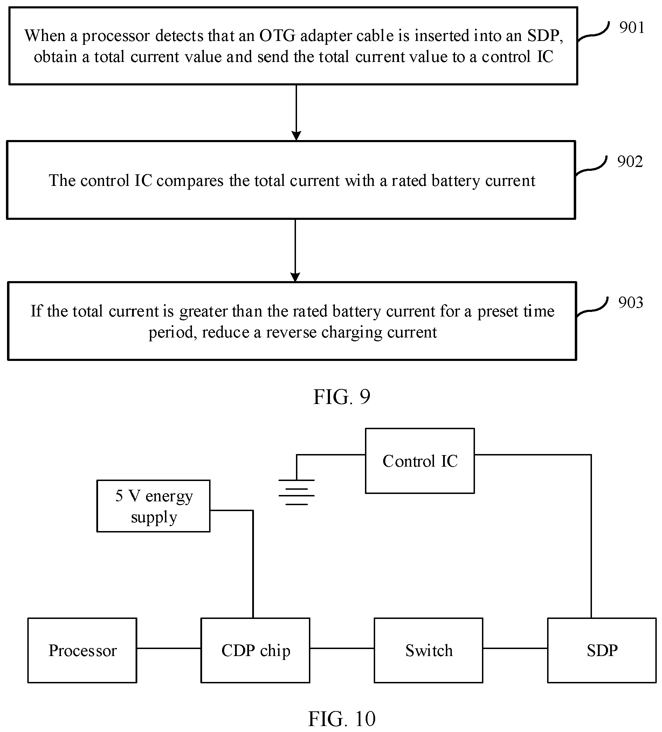

In addition, FIG. 9 is a schematic flowchart of a charging method according to some comparison embodiments. The charging method shown in FIG. 9 is applied to an electronic device shown in FIG. 10. The electronic device shown in FIG. 10 includes a charging downstream port (charging downstream port, CDP) chip, a processor, a switch, a control integrated circuit (integrated circuit, IC), and a standard downstream port (standard downstream port, SDP). It may be understood that the electronic device shown in FIG. 10 uses the CDP chip. Because a CDP communication protocol specifies that a maximum transmission current of the CDP chip is 1.5 A, a maximum value of a reverse charging current output by the electronic device shown in FIG. 10 is 1.5 A. In addition, a circuit shown in FIG. 10 may provide a voltage of 5 V.

As shown in FIG. 9, the charging method includes: when the processor of the electronic device detects that an on-the-go (on-the-go, OTG) adapter cable is inserted into the SDP, obtaining a total current and sending the total current to the control IC, where the total current = the reverse charging current + a current consumed when an application of the first electronic device runs, and an initial value of the reverse charging current is the maximum transmission current of the CDP. The control IC compares the total current with a rated battery current. If the total current is greater than the rated battery current for a preset time period, the reverse charging current is reduced. If the total current is less than or equal to the rated battery current for a preset time period, power is externally supplied based on the maximum transmission current of the CDP.

In the foregoing charging method, in a reverse charging process, the reverse charging current can be reduced only based on a situation of the current consumed when the application of the first electronic device runs, and an adjustment rule is single. In some cases, it is still difficult to ensure normal running of the electronic device.

According to the charging methods provided in embodiments of this application, a current in a reverse charging process may be adjusted in real time based on states in various aspects such as a current remaining battery level, a current battery voltage, current system power consumption, a current battery temperature, a current running application state, and the like of the first electronic device, so that a running state of the first electronic device is comprehensively considered, normal running of the first electronic device can be effectively ensured, and user experience is improved.

Embodiments of mechanisms disclosed in this application may be implemented in hardware, software, firmware, or a combination of these implementation methods. Embodiments of this application may be implemented as a computer program or program code that is executed in a programmable system. The programmable system includes at least one processor, a storage system (including a volatile memory, a non-volatile memory, and/or a storage element), at least one input device, and at least one output device.

The program code may be applied to input instructions to perform the functions described in this application and generate output information. The output information may be applied to one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level programming language or an object-oriented programming language to communicate with the processing system. The program code may alternatively be implemented in an assembly language or a machine language when needed. Actually, the mechanisms described in this application are not limited to a scope of any particular programming language. In any case, the language may be a compiled language or an interpretive language. In some cases, the disclosed embodiments may be implemented by hardware, firmware, software, or any combination thereof. The disclosed embodiments may alternatively be implemented as instructions carried by or stored on one or more temporary or non-temporary machine-readable (for example, computer-readable) storage medium, and the instructions may be read and executed by one or more processors. For example, the instructions may be distributed through a network or another computer-readable medium. Therefore, the machine-readable medium may include any mechanism for storing or transmitting information in a machine (for example, a computer)-readable form, including but not limited to a floppy disk, a compact disc, an optical disc, a read-only memory (compact disc-read only memory, CD-ROMs), a magnetic optical disc, a read-only memory (read only memory, ROM), a random-access memory (random-access memory, RAM), an erasable programmable read only memory (erasable programmable read only memory, EPROM), an electrically erasable programmable read-only memory (electrically erasable programmable read-only memory, EEPROM), a magnetic card or an optical card, a flash memory, or a tangible machine-readable memory for transmitting information (for example, a carrier, an infrared signal, or a digital signal) through the Internet by using propagation signals in an electrical, optical, acoustic, or another form. Therefore, the machine-readable medium includes any type of machine-readable medium that is suitable for storing or transmitting electronic instructions or information in a machine (for example, a computer)-readable form.

In the accompanying drawings of this application, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving the technical problem provided in this application. In addition, to highlight an innovative part of this application, a unit/module that is not closely related to resolving the technical problems proposed in this application is not introduced in the foregoing device embodiments of this application. This does not indicate that there is not another unit/module in the foregoing device embodiments.

It should be noted that, in examples and this specification of this patent, relational terms such as first and second are only used to distinguish one entity or operation from another entity or operation, and do not necessarily require or imply that any actual relationship or sequence exists between these entities or operations. Moreover, terms "include", "comprise", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device that includes the element.

Although this application has been illustrated and described with reference to some preferred embodiments of this application, a person of ordinary skill in the art should understand that various changes may be made to this application in form and detail without departing from the spirit and scope of this application.

## Claims

1. A charging method, applied to a first electronic device, wherein the method comprises:
detecting that the first electronic device establishes a charging connection to a second electronic device;
obtaining a charging request of the second electronic device, wherein the charging request comprises a requested charging voltage and a requested charging current;
determining that the first electronic device is in a first running state, and using the requested charging voltage and the requested charging current as a power supply voltage and a power supply current that are provided for the second electronic device; and
determining that the first electronic device is in a second running state, and determining, based on the second running state and the charging request, a first power supply voltage and a first power supply current that are provided for the second electronic device, wherein the first power supply voltage is equal to the requested charging voltage, and the first power supply current is less than the requested charging current.

2. The charging method according to claim 1, wherein at least one of the first running state or the second running state comprises running states in a plurality of dimensions, and the running states in the plurality of dimensions comprise at least one of a current remaining battery level, a current battery voltage, current system power consumption, a current battery temperature, or a current running application state of the first electronic device.

3. The charging method according to claim 1 or 2, wherein determining that the first electronic device is in the first running state comprises:
determining available output currents that respectively correspond to the running states in the plurality of dimensions of the first electronic device;
determining a currently available output current of the first electronic device based on the available output currents that respectively correspond to the running states in the plurality of dimensions of the first electronic device; and
when the currently available output current of the first electronic device is greater than or equal to the requested charging current, determining that the first electronic device is in the first running state.

4. The charging method according to claim 3, wherein determining that the first electronic device is in the second running state comprises:
when the currently available output current of the first electronic device is less than the requested charging current, determining that the first electronic device is in the second running state.

5. The charging method according to claim 3, wherein determining the currently available output current of the first electronic device based on the available output currents that respectively correspond to the running states in the plurality of dimensions of the first electronic device comprises:
determining, based on the running states in the plurality of dimensions of the first electronic device, levels in the dimensions corresponding to the first electronic device;
determining, based on the levels in the dimensions corresponding to the first electronic device, available output currents that respectively correspond to the levels in the dimensions; and
using a smallest available output current in the available output currents that respectively correspond to the levels in the dimensions as the currently available output current of the first electronic device.

6. The charging method according to claim 5, wherein determining, based on the second running state and the charging request, the first power supply voltage and the first power supply current that are provided for the second electronic device comprises:
using the requested charging voltage as the first power supply voltage provided for the second electronic device; and
using the currently available output current of the first electronic device as the first power supply current provided for the second electronic device.

7. The charging method according to any one of claims 1 to 6, wherein before obtaining the charging request of the second electronic device, the method further comprises:
determining, by the first electronic device, a type of the first electronic device;
when the first electronic device determines that the type of the first electronic device is a source end device, determining whether the first electronic device and the second electronic device successfully negotiate a fast charging protocol; and
when the first electronic device and the second electronic device successfully negotiate the fast charging protocol, obtaining, by the first electronic device, the charging request of the second electronic device.

8. The charging method according to claim 7, wherein the method further comprises:
when the first electronic device and the second electronic device fail to negotiate the fast charging protocol, supplying, by the first electronic device, power to the second electronic device based on a preset charging voltage and a preset charging current.

9. The charging method according to any one of claims 1 to 8, wherein the method further comprises:
determining that the first electronic device is in a third running state, and supplying power to the second electronic device based on the preset charging voltage and the preset charging current, wherein
the third running state comprises at least one of the following:
a status of the first electronic device is abnormal;
a voltage of the first electronic device is less than a first preset voltage threshold;
a remaining battery level of the first electronic device is less than a first preset battery level threshold; and
a temperature of the first electronic device exceeds a first preset temperature threshold.

10. An electronic device, comprising: a memory, configured to store instructions executed by one or more processors of the electronic device; and the processor, one of the one or more processors of the electronic device, configured to perform the charging method according to any one of claims 1 to 9.

11. A readable medium, wherein the readable medium stores instructions, and when the instructions are executed on an electronic device, the electronic device is enabled to perform the charging method according to any one of claims 1 to 9.
